# EUROPÄISCHE PATENTSCHRIFT

(11) **EP 4 495 453 B1**
(45) Veröffentlichungstag und Bekanntmachung des Hinweises auf die Patenterteilung: **29.07.2026**
(21) Anmeldenummer: 24189090.4
(22) Anmeldetag: 17.07.2024
(51) Int. Cl.: F16F 1/38, F16F 1/393

(54) **KRAFTFAHRZEUGLAGER, KRAFTFAHRZEUG SOWIE LAGERANORDNUNG**
MOTOR VEHICLE BEARING, MOTOR VEHICLE AND BEARING ARRANGEMENT
PALIER DE VÉHICULE AUTOMOBILE, VÉHICULE AUTOMOBILE AINSI QU'AGENCEMENT DE PALIER

(30) Priorität: 18.07.2023 DE 102023118899
(43) Veröffentlichungstag der Anmeldung: 22.01.2025
(73) Patentinhaber: Vibracoustic SE, 69469 Weinheim (DE)
(72) Erfinder: Rose, David, 22159 Hamburg (DE); Schmidt-Sunnus, Rainer, 23562 Lübeck (DE); Frieß, Jakob, 21435 Stelle (DE)
(74) Vertreter: Patentanwälte Olbricht Buchhold Keulertz

(56) Entgegenhaltungen:
- CN-A- 110 686 033
- DE-A1- 3 624 280
- US-A1- 2006 290 040

## Beschreibung

Die Erfindung betrifft ein Kraftfahrzeuglager, ein Kraftfahrzeug mit wenigstens einem Kraftfahrzeuglager, sowie eine Lageranordnung.

Kraftfahrzeuglager, Kraftfahrzeuge, und Lageranordnungen der eingangs genannten Art sind im Allgemeinen bekannt. Entsprechende Kraftfahrzeuglager finden an vielen Stellen in einem Kraftfahrzeug Verwendung, insbesondere zur vibrationsdämpfenden Lagerung von Komponenten und Aggregaten aneinander bzw. an einer Karosserie. Ein Beispiel ist ein Antriebsmotor, der an der Karosserie des Kraftfahrzeugs gelagert werden muss. Dabei ist zu verhindern, dass sich Vibrationen vom Antriebsmotor über das Kraftfahrzeuglager auf die Karosserie übertragen werden, da dies zu spür- und hörbaren Vibrationen führen würde, die den Fahrkomfort beeinträchtigen würden. Entsprechende Kraftfahrzeuglager weisen regelmäßig entsprechende Befestigungen zur Festlegung der beiden aneinander zu befestigenden Komponenten auf, zwischen denen eine vibrationsdämpfende Struktur eingebracht ist, zum Beispiel ein Gummidämpfer. IP

Das Dokument CN 110 686 033 A offenbart ein Kraftfahrzeuglager, mit einer Lageraufnahme und einer Zentrallängsachse, wobei die Lageraufnahme eine Einbauhülse aufweist, die eine Innenoberfläche mit wenigstens einem ersten konischen Innenoberflächenabschnitt aufweist, und einer in der Lageraufnahme gehaltenen Hülse aufweist.

Es ist bekannt, dass solche Kraftfahrzeuglager Lageraufnahmen zur Festlegung an einer Komponente zugeordnet sind, die ein im wesentlichen zylindrisches Aufnahmeauge aufweisen. In dieses Aufnahmeauge wird eine Hülse, beispielsweise aus einem Kunststoff oder einem Metall, eingepresst. Das Lager weist ferner einen Kern auf, welcher an der anderen Komponente festgelegt wird. Hierzu weist der Kern beispielsweise eine Durchgangöffnung entlang einer Zentrallängsachse auf, durch die ein Befestigungsmittel, beispielsweise eine Schraube, zur Festlegung an der anderen Komponente hindurchgeführt wird. Zwischen Kern und Hülse ist bei solchen Lagern ein Elastomerkörper angeordnet, welcher mittels Vulkanisation stoffschlüssig am Kern und der Hülse festgelegt ist und diese beiden Komponenten damit koppelt.

Wird eine Außenhülse aus Kunststoff in das Aufnahmeauge eingepresst, so führt Relaxation des Kunststoffes zu einer Abnahme der Vorspannung, welche insbesondere von wechselnden und hohen Temperaturen begünstig wird. Da der Festsitz der Hülse im Aufnahmeauge unter anderem von der Vorspannung abhängig sein kann, führt eine Abnahme der Vorspannung der Hülse im Aufnahmeauge zu einer erhöhten Gefahr, dass die zylindrische Hülse axial aus dem Aufnahmeauge auswandern kann. Dieser Gefahr kann in einer Richtung durch einen Kragen an der Hülse, der einen axialen Formschluss bildet, unterbunden werden; in die entgegengesetzte Richtung ist ein Formschluss mittels eines Kragens wegen der Notwendigkeit einer axialen Montage hingegen nicht möglich. Die Auspresskraft einer solchen Kragenaußenhülse in Richtung entgegen der Einpressrichtung aus dem Aufnahmeauge eines Gehäuses kann folglich zu gering sein. Insbesondere kann es zu einem axialen Auswandern kommen, was zu Defekten am Kraftfahrzeug führen kann.

Ist das Aufnahmeauge Teil einer Struktur, die mittels Guss, beispielsweise Aluminiumdruckguss, hergestellt wird, so befinden sich auf der Innenseite des Aufnahmeauges prozessbedingte Entformungsschrägen. Wird in ein Aufnahmeauge mit Entformungsschrägen eine zylindrische Hülse eingepresst, so erhöht sich sogar die Neigung des Bauteils zum axialen Auswandern. Besteht die Hülse dann noch aus einem Kunststoff und verringert die im Laufe der Zeit die Vorspannkraft, so steigt die Gefahr des axialen Auswanderns noch weiter an.

Bei bekannten Lösungen werden daher die Entformungsschrägen auf der Innenseite der Aufnahmeaugen spanend entfernt. Dieses geschieht beispielsweise mittels Fräsen oder Ausspindeln. Es sind ferner Lösungen aus dem Markt bekannt, bei denen die Innenseite der Aufnahmeaugen beim Ausspindeln gleich mit einer Sägezahngeometrie versehen werden. Dabei sind die Zähne in der Art angestellt, dass ein Einpressen des Lagers möglich ist, es bei einem Auspressen des Lagers hingegen zu einem Verkrallen der Zähne im Kunststoff kommt, was zu einer erheblichen Erhöhung der Auspresskräfte führt. Diese Lösungen sind insbesondere bei Lagern mit Kragenhülsen effektiv, da die Lager in einer Richtung nicht über den Kragen hinweg gepresst werden können und in der anderen Richtung sich in den Sägezähnen verkrallen. Nachteilig an solchen Lösungen ist hingegen der zusätzliche Aufwand durch das Ausspindeln bzw. die Herstellung der Sägezähne, was die Funktionseinheit aus Lager auf korrespondierendem Aufnahmeauge teuer werden lässt.

Somit stellt sich die Aufgabe, die Auspresskraft eines Lagers mit Kunststoffaußenrohr zu erhöhen, ohne dass das Aufnahmeauge mit Entformungsschrägen bearbeitet wird.

Die Aufgabe wird gelöst durch ein Kraftfahrzeuglager nach Anspruch 1, ein Kraftfahrzeug gemäß dem nebengeordneten Anspruch 13, sowie einer Lageranordnung für ein Kraftfahrzeuglager gemäß dem nebengeordneten Anspruch 14. Ausgestaltungen sind Gegenstand der abhängigen Ansprüche.

Beschrieben wird ein Kraftfahrzeuglager, mit einer Lageraufnahme und einer Zentrallängsachse, wobei die Lageraufnahme ein Aufnahmeauge aufweist, das eine Innenoberfläche mit wenigstens einem ersten konischen Innenoberflächenabschnitt aufweist, und einer in der Lageraufnahme gehaltenen Kunststoff-Kragenaußenhülse, wobei die Kunststoff-Kragenaußenhülse einem radial ausgerichteten Kragen aufweist, wobei der Kragen in montiertem Zustand an der Lageraufnahme um das Aufnahmeauge herum anliegt, einen sich im Wesentlichen axial erstreckenden Kern, sowie einem Elastomerkörper, der zwischen der Kunststoff-Kragenaußenhülse und dem Kern angeordnet ist, wobei die Kunststoff-Kragenaußenhülse eine zum wenigstens einen ersten konischen Innenoberflächenabschnitt des Aufnahmeauges im wesentlichen komplementäre Außenkontur aufweist, wobei sich der erste konische Innenoberflächenabschnitt von einer kragenabgewandten Seite in Richtung des Kragens verjüngt, wobei der zur Außenkontur der Kunststoff-Kragenaußenhülse korrespondierende erste konische Innenoberflächenabschnitt einen konischen Hinterschnitt ausbildet, sodass die Kunststoff-Kragenaußenhülse gegen Herausrutschen bezüglich der Zentrallängsachse in einer ersten Richtung durch den Kragen und in einer der ersten Richtung entgegengesetzten zweiten Richtung durch den konischen Hinterschnitt gesichert ist.

Das Kraftfahrzeuglager kann zu verschiedenen Zwecken verwendet werden, zum Beispiel als Lenkerlager, Pendelstützenlager, Fahrschemellager, Hilfsrahmenlager, Getriebequerbrückenlager, Differentiallager, Gehäuse zur Lagerung von KFZ-Aggregaten wie Batteriekastenlagerung, oder Getriebelager.

Die Lageraufnahme kann als separates Bauteil oder als integriertes Bauteil ausgebildet sein, zum Beispiel in ein Gehäuse eines Aggregats oder einer Antriebskomponente eines Kraftfahrzeugs.

Das Aufnahmeauge kann im Wesentlichen oder vollständig rotationssymmetrisch ausgebildet sein. Dabei kann vorgesehen sein, dass die axiale Richtung im verbauten Zustand im Wesentlichen in Schwerkraftrichtung oder im Wesentlichen horizontal ausgerichtet ist.

Kunststoff-Kragenaußenhülse, Elastomerkörper und Kern bilden eine Lageranordnung.

In das Aufnahmeauge ist eine Kunststoff-Kragenaußenhülse eingesetzt, die beispielsweise aus einem spritzgussgeeigneten Kunststoff- oder Faserkunststoffmaterial bestehen kann. Für das Spritzgießen eignen sich eine Vielzahl von Thermoplasten, Duroplasten und Elastomeren. Speziell für das Spritzgießen von technischen Kunststoffteilen stehen bewährte Konstruktionskunststoffe, wie PA6, PBT, PES, POM, PSU, oder insbesondere PA66 zur Verfügung. Diese Kunststoffe können zur Erhöhung der Steifigkeit sowie zur Verringerung der Relaxationsneigung faserverstärkt sein.

Die Kunststoff-Kragenaußenhülse weist einen radial innenliegend angeordneten Elastomerkörper auf, der nicht haftend oder haftend mit der Kunststoff-Kragenaußenhülse verbunden ist, beispielsweise anvulkanisiert. Der Elastomerkörper kann aus Naturkautschuk oder einem synthetischen Elastomer wie EPDM bestehen. Der Elastomerkörper ist für den Hauptteil der schwingungsdämpfenden Funktion des Kraftfahrzeuglagers zuständig.

Der Elastomerkörper weist radial innenliegend einen Kern, insbesondere einen zylindrischen Kern auf, der eine axiale Durchgangsöffnung aufweist, die zur Festlegung eines der beiden aneinander festzulegenden Bauteile dient. Der zylindrische Kern kann aus Kunststoff oder Metall bestehen, zum Beispiel Aluminium. Der Kern kann haftend am Elastomerkörper festgelegt, insbesondere einvulkanisiert sein. Die Durchgangsöffnung kann ebenfalls zylindrisch ausgestaltet sein und beispielweise eine Schraube, einen Bolzen oder einen Gewindebolzen aufnehmen.

Kunststoff-Kragenaußenhülse, Elastomerkörper und Kern können im Wesentlichen koaxial und im Wesentlichen rotationssymmetrisch aufgebaut sein.

Der erste konische Innenoberflächenabschnitt bildet eine Kegelstumpfmantelfläche, an der die Kunststoff-Kragenaußenhülse zumindest teilweise flächig anliegt.

Der Kragen der Kunststoff-Kragenaußenhülse sichert die Kunststoff-Kragenaußenhülse gegen ein axiales Herauswandern in einer ersten Richtung. In einer entgegengesetzten zweiten Richtung wird durch den konischen Hinterschnitt eine formschlüssige Verbindung erzeugt, wodurch ein Herauswandern in eine zur ersten Richtung entgegengesetzte zweite Richtung verhindert werden kann. Auf diese Weise gelingt es, die Auspresskraft in die zweite Richtung so weit zu erhöhen, dass ein unbeabsichtigtes Herauspressen im laufenden Betrieb ausgeschlossen werden kann.

Gemäß einem ersten weiterführenden Aspekt kann vorgesehen sein, dass die Innenoberfläche des Aufnahmeauges wenigstens einen zweiten konischen Innenoberflächenabschnitt aufweist, wobei erster konischer Innenoberflächenabschnitt und zweiter konischer Innenoberflächenabschnitt sich zum Inneren des Aufnahmeauges hin verjüngen oder aufweiten, wobei die Außenkontur der Kunststoff-Kragenaußenhülse im Wesentlichen komplementär zur Innenoberfläche des Aufnahmeauges ist.

Durch die entsprechende doppelkonische Ausgestaltung, bei der zwei Kegelstumpfmanteloberflächen ineinander übergehen, kann das Aufnahmeauge besonders gut entformt werden.

Gemäß einem weiteren weiterführenden Aspekt kann vorgesehen sein, dass die Lageraufnahme aus Metall besteht, insbesondere aus gegossenem Metall, insbesondere aus Aluminiumdruckguss.

Eine solche Lageraufnahme kann integraler Bestandteil eines Bauteils oder der Karosserie des Kraftfahrzeugs oder ein separates Element sein, das starr zum Beispiel an der Karosserie oder dem Bauteil festgelegt werden kann.

Gemäß einem weiteren weiterführenden Aspekt kann vorgesehen sein, dass die Innenoberfläche des Aufnahmeauges unbearbeitet ist. Dies reduziert einerseits den Herstellaufwand der Lageraufnahme.

Gemäß einem weiteren weiterführenden Aspekt kann vorgesehen sein, dass der wenigstens eine erste konische Innenoberflächenabschnitt des Aufnahmeauges eine Entformungskontur ist.

Dies erleichtert die Konstruktion der Lageraufnahme und erlaubt die Verwendung von kostengünstigen Gussverfahren ohne aufwändige mechanische Nacharbeit der Innenkontur.

Gemäß einem weiteren weiterführenden Aspekt kann vorgesehen sein, dass die Kunststoff-Kragenaußenhülse mindestens teilweise im zur ersten konischen Innenoberflächenabschnitt korrespondierenden kragenabgewandten Bereich in der ersten Richtung eine zunehmende radiale Ausdehnung aufweist.

Auf diese Weise kann das Kraftfahrzeuglager für Anwendungen optimiert werden, bei denen die axiale Richtung des Kraftfahrzeuglagers hoch belastet ist und das Lager eine starke axiale Progression aufweist.

Bei einer derartigen Ausgestaltung kann vorgesehen sein, dass der Elastomerkörper eine abnehmende radiale Ausdehnung aufweist.

Gemäß einem weiteren weiterführenden Aspekt kann vorgesehen sein, dass eine nicht montierte Kunststoff-Kragenaußenhülse einen größeren Konturendurchmesser aufweist als ein Durchmesser der Innenoberfläche des Aufnahmeauges auf gleicher axialer Höhe, sodass im montierten Zustand eine Kompression der Kunststoff-Kragenaußenhülse entsteht.

Auf diese Weise kann ein Presssitz geschaffen werden, der einen festeren Sitz der Kunststoff-Kragenaußenhülse ermöglicht.

Die Kunststoff-Kragenaußenhülse kann gemäß eines weiterführenden Aspekts einen axial verlaufenden Kompressionsschlitz aufweisen, der beim Zusammendrücken Druck in der Elastomerspur erzeugt und dadurch einen günstigeren Spannungszustand im Elastomerkörper hervorbringen kann, welcher zu einer erhöhten Lebensdauer führen kann. Ist der Schlitz erst einmal geschlossen, so kann beim Einpressen des Lagers in das Aufnahmeauge aufgrund der Presspassung weiterer Druck in das Elastomer induziert werden.

Gemäß einem weiteren weiterführenden Aspekt kann vorgesehen sein, dass die Kunststoff-Kragenaußenhülse an einer äußeren Mantelfläche eine Rippenstruktur aufweist.

Auf diese Weise kann die maximale Materialstärke der Kunststoff-Kragenaußenhülse reduziert werden, zum Beispiel auf Werte von kleiner oder gleich 5 mm. Die durch die Rippenstruktur reduzierten Materialstärken beschleunigen den Spritzgussprozess erheblich und machen die Herstellung kostengünstiger.

Gemäß einem weiteren weiterführenden Aspekt kann vorgesehen sein, dass die Kunststoff-Kragenaußenhülse an ihrer äußeren Mantelfläche wenigstens eine ringförmige Freimachung aufweist.

Gemäß einem weiteren weiterführenden Aspekt kann vorgesehen sein, dass die ringförmige Freimachung mit dem geringsten Innendurchmesser des Aufnahmeauges bzgl. seiner axialen Position korrespondiert.

Gemäß einem weiteren weiterführenden Aspekt kann vorgesehen sein, dass die zum ersten konischen Innenoberflächenabschnitt korrespondierende Außenkontur des Hülsenkörpers mit dem Kragen in einem Längsschnitt einen stumpfen Winkel einschließt.

Hierdurch kann der Hinterschnitt besonders einfach geschaffen werden.

Ein erster unabhängiger Gegenstand betrifft ein Kraftfahrzeug, mit wenigstens einem Kraftfahrzeuglager der vorgenannten Art.

Ein weiterer unabhängiger Gegenstand betrifft eine Lageranordnung für ein Kraftfahrzeuglager der vorgenannten Art.

Das Kraftfahrzeuglager weist eine Lageraufnahme mit einem Aufnahmeauge auf, das eine Innenoberfläche mit wenigstens einem ersten konischen Innenoberflächenabschnitt aufweist, wobei die Lageranordnung zur Aufnahme in der Lageranordnung ausgebildet ist.

Die Lageranordnung weist eine Kunststoff-Kragenaußenhülse auf, wobei die Kunststoff-Kragenaußenhülse einem radial ausgerichteten Kragen aufweist, wobei der Kragen in montiertem Zustand an der Lageraufnahme um das Aufnahmeauge herum anliegt, einen sich im Wesentlichen axial erstreckenden Kern, sowie einem Elastomerkörper, der zwischen der Kunststoff-Kragenaußenhülse und dem Kern angeordnet ist, wobei die Kunststoff-Kragenaußenhülse eine zum wenigstens einen ersten konischen Innenoberflächenabschnitt des Aufnahmeauges im wesentlichen komplementäre Außenkontur aufweist, wobei sich der erste konische Innenoberflächenabschnitt von einer kragenabgewandten Seite in Richtung des Kragens verjüngt, wobei der zur Außenkontur der Kunststoff-Kragenaußenhülse korrespondierende erste konische Innenoberflächenabschnitt einen konischen Hinterschnitt ausbildet, sodass die Kunststoff-Kragenaußenhülse und damit das Kraftfahrzeuglager gegen Herausrutschen bezüglich der Zentrallängsachse in einer ersten Richtung durch den Kragen und in einer der ersten Richtung entgegengesetzten zweiten Richtung durch den konischen Hinterschnitt gesichert ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schnittdarstellung durch ein Kraftfahrzeuglager in einer ersten Ausführungsform;
- Fig. 2: eine Schnittdarstellung durch ein Kraftfahrzeuglager in einer zweiten Ausführungsform;
- Fig. 3: eine Schnittdarstellung durch ein Kraftfahrzeuglager in einer dritten Ausführungsform;
- Fig. 4: eine Seitenansicht auf das Kraftfahrzeuglager aus Fig. 3, sowie
- Fig. 5: eine perspektivische Ansicht auf das Kraftfahrzeuglager aus Fig. 3.

In den nachfolgend beschriebenen Ausführungsbeispielen werden gleiche oder gleichwirkende Bauteile zur besseren Lesbarkeit mit gleichen Bezugszeichen versehen.

Die Erfindung ist nicht auf eine der vorbeschriebenen Ausführungsformen beschränkt, sondern in vielfältiger Weise abwandelbar.

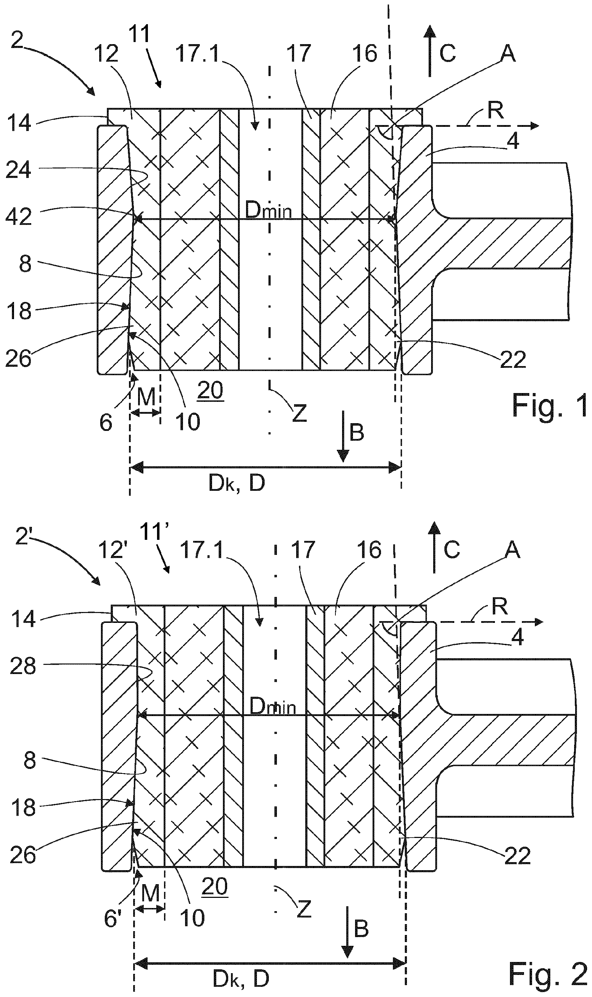

Fig. 1 zeigt eine Schnittdarstellung durch ein Kraftfahrzeuglager 2.

Das Kraftfahrzeuglager 2 weist eine Lageraufnahme 4 auf, die ein Aufnahmeauge 6 mit einer Innenoberfläche 8 aufweist, die einen ersten konischen Innenoberflächenabschnitt 10 definiert. Der erste konische Innenoberflächenabschnitt 10 entspricht im Wesentlichen einem Kegelstumpfmantel.

In dem Aufnahmeauge 6 ist eine Lageranordnung 11 mit einer Kunststoff-Kragenaußenhülse 12 angeordnet, die einen im Wesentlichen radial abstehenden und an der Lageraufnahme 4 anliegenden Kragen 14 aufweist. Die Kunststoff-Kragenaußenhülse 12 sitzt formschlüssig in der Lageraufnahme 4. Der Kragen 14 der Kunststoff-Kragenaußenhülse 12 verhindert ein Herauswandern der Kunststoff-Kragenaußenhülse 12 aus dem Aufnahmeauge 6 in eine erste Richtung B. Die Kunststoff-Kragenaußenhülse 12 besteht im vorliegenden Ausführungsbeispiel aus faserverstärktem PA 66. Alternative Ausführungsformen können andere Kunststoffe mit oder ohne Faserverstärkung einsetzen.

Die Kunststoff-Kragenaußenhülse 12 weist einen koaxialen zylindrischen Hohlraum auf, in dem ein Elastomerkörper 16 haftend angeordnet ist. Der Elastomerkörper 16 besteht vorliegend aus einer auf Naturkautschuk basierten Gummimischung.

Der Elastomerkörper 16 weist einen koaxialen zylindrischen Hohlraum auf, in dem ein zylindrischer Kern 17 mit einer Durchgangsausnehmung 17.1 am Elastomerkörper 16 haftend angeordnet ist. Der Kern 17 besteht vorliegend aus einem Metall, wobei beispielsweise Aluminium oder Stahl geeignet sind. In die Durchgangsausnehmung 17.1 kann eine Schraube, ein Bolzen oder ein Gewindebolzen eingeführt werden, um das Lager damit zu befestigen.

Kunststoff-Kragenaußenhülse 12, Elastomerkörper 16 sowie zylindrischer Kern 17 sind im Wesentlichen rotationssymmetrisch zu einer Zentrallängsachse Z ausgebildet.

Die Kunststoff-Kragenaußenhülse 12 weist eine Außenkontur 18 auf, die im Wesentlichen mit einer Kontur der Innenoberfläche 8 korrespondiert.

Auf einer kragenabgewandten Seite 20 des Kraftfahrzeuglagers 2 wird durch den ersten konischen Innenoberflächenabschnitt 10 ein konischer Hinterschnitt 22 erzeugt, der dazu führt, dass die Kunststoff-Kragenaußenhülse 12 in eine der ersten Richtung B entgegengesetzt ausgerichtete zweite Richtung C im Betrieb nicht herauswandern kann. Eine notwendige Auspresskraft ist durch den konischen Hinterschnitt 22 erheblich erhöht. Im Zusammenspiel mit dem Kragen 14 kann die Kunststoff-Kragenaußenhülse 12 somit in beiden Richtungen B, C gesichert werden.

Die Lageraufnahme 4 weißt im Aufnahmeauge 6 im vorliegenden Ausführungsbeispiel zudem einen zweiten konischen Innenoberflächenabschnitt 24 auf, der in den ersten konischen Innenoberflächenabschnitt 10 übergeht. Durch diese Anordnung wird eine Doppelkegelstumpfmantelstruktur ausgebildet, die einen geringsten lichten Innendurchmesser Dmin im Übergang zwischen erstem konischen Innenoberflächenabschnitt 10 und zweitem konischen Innenoberflächenabschnitt 24 erzeugt. Ein Innenoberflächendurchmesser D variiert entlang der Zentrallängsachse Z, ist aber stets größer oder gleich dem geringsten lichten Innendurchmesser Dmin.

In einem kragenabgewandten Bereich 26 der Kunststoff-Kragenaußenhülse 12 nimmt eine radiale Ausdehnung M der Kunststoff-Kragenaußenhülse 12 zu.

Die Kunststoff-Kragenaußenhülse 12 kann in Bezug auf die Innenoberfläche 8 des Aufnahmeauges 6 leicht überdimensioniert sein, um eine höhere Klemmung aufgrund der sich einstellenden Presspassung zu erreichen, wobei ein Konturendurchmesser Dk der Kunststoff-Kragenaußenhülse 12 in unverbautem Zustand auf korrespondierender axialer Höhe zumindest abschnittsweise größer ist als der Innenoberflächendurchmesser D des Aufnahmeauges 6.

Ein Winkel A zwischen einer radialen Richtung R und dem ersten konischen Innenoberflächenabschnitt 10 ist stumpf, wodurch der konische Hinterschnitt 22 erzeugt wird.

Zusätzlich ist dort, wo sich die beiden Konusse der Außenkontur 18 treffen, eine ringförmige Freimachung 42 angeordnet ist. Dieses ist günstig für die Toleranzabstimmungen der Doppelkonusse zu Innengeometrie des Aufnahmeauges 6.

Fig. 2 zeigt eine Schnittdarstellung durch ein Kraftfahrzeuglager 2' mit einer Lageranordnung 11' in einem zweiten möglichen Ausführungsbeispiel.

Im Unterschied zum ersten Ausführungsbeispiel nach Fig. 1 ist statt eines zweiten konischen Innenoberflächenabschnitts ein zylindrischer Innenoberflächenabschnitt 28 vorgesehen. Hierdurch wird keine doppelkegelige Innenoberfläche 8' erzeugt, was die Abstimmung der Toleranzfolgen am Lager 2' und Aufnahmeauge 6' zueinander erleichtert.

Im Übrigen wird auf die Beschreibungen zum ersten Ausführungsbeispiel verwiesen.

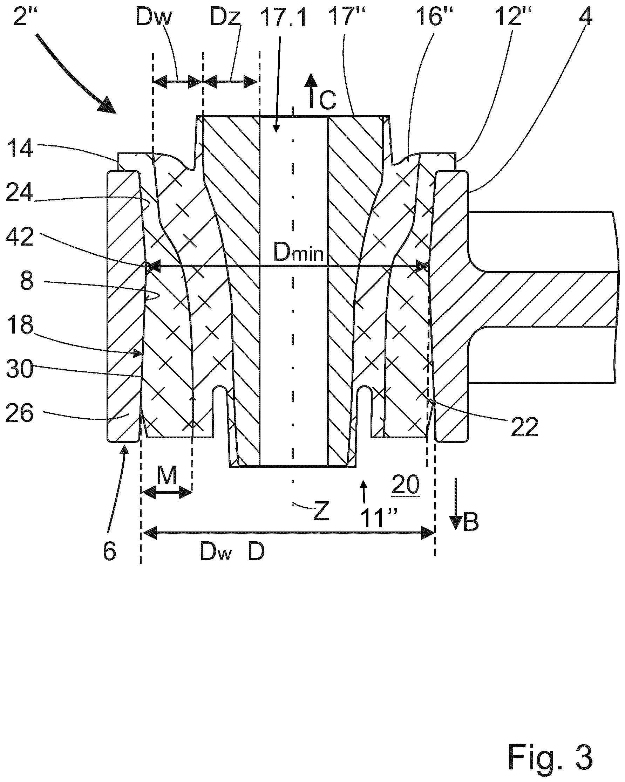

Fig. 3 zeigt eine Schnittdarstellung durch ein Kraftfahrzeuglager 2" mit einer Lageranordnung 11" in einem dritten möglichen Ausführungsbeispiel.

Im vorliegenden Ausführungsbeispiel sind die Formen von Kunststoff-Kragenaußenhülse 12" sowie Elastomerkörper 16" komplexer als in den ersten beiden Ausführungsbeispielen. Die radiale Ausdehnung M der Kunststoff-Kragenaußenhülse 12" nimmt in die erste Richtung B zu und ein Außendurchmesser des Elastomerkörper 16" entsprechend ab. Der Elastomerkörper 16" ist keilförmiger Gestalt und weist über die Länge eine im wesentlichen gleichbleibende Wandstärke Dw auf, wohingegen eine Wandstärke Dz des Kerns 17" in die erste Richtung B abnimmt. Durch die Keilform des Elastomerkörpers 16" weist ein solches Lager 2" bei einer Belastung in Richtung B einen zunehmend progressiven Steifigkeitsverlauf auf, so dass dieses Lager hohe Kräfte in dieser Richtung aufnehmen kann.

Eine Mantelfläche 30 der Kunststoff-Kragenaußenhülse 12" läuft wie im ersten Ausführungsbeispiel nach Fig. 1 in Form eines Doppelkonus jeweils von den Stirnseiten in Richtung Zentrum dem Mantelfläche 30 zu, weswegen im Übrigen auf die entsprechenden Beschreibungen aus Fig. 1 verwiesen wird.

Zusätzlich ist dort, wo sich die beiden Konusse der Außenkontur 18‴ treffen, eine ringförmige Freimachung 42 angeordnet ist. Dieses ist günstig für die Toleranzabstimmungen der Doppelkonusse zu Innengeometrie des Aufnahmeauges 6.

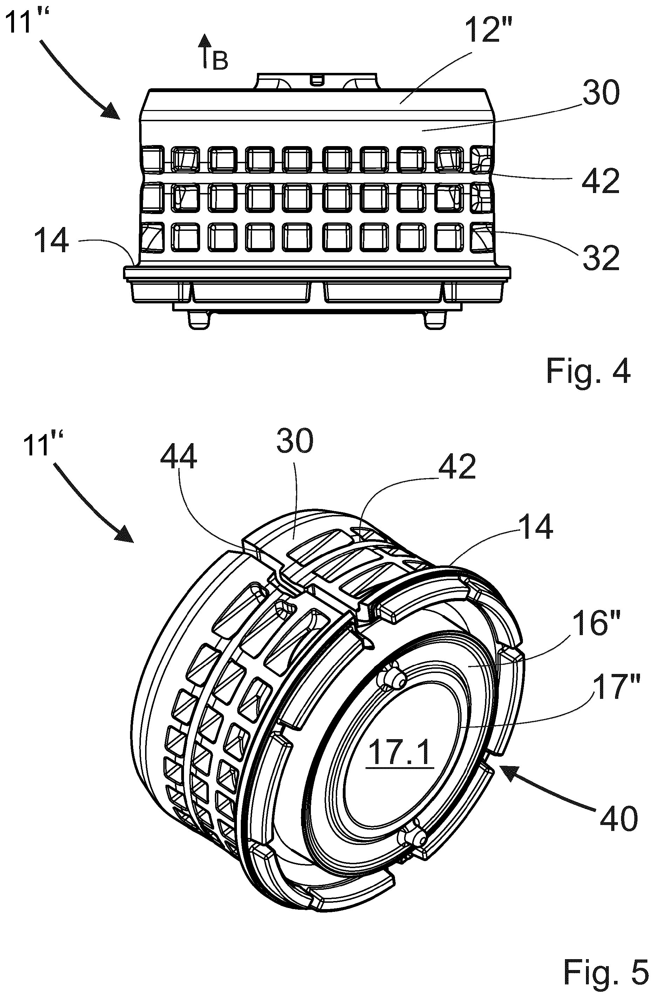

Fig. 4 zeigt eine Seitenansicht der Lageranordnung 11" aus Fig. 3 ohne die Lageraufnahme 4.

Auf der Mantelfläche 30 ist eine Rippenstruktur 32 angeordnet, die bewirkt, dass eine maximale Materialdicke der Kunststoff-Kragenaußenhülse 12 trotz der hohen radialen Ausdehnung M (siehe Fig. 3) der Kunststoff-Kragenhülse 12" unter einem für die Produktion kritischen Wert, hier ca. 4 mm, bleibt. Hierdurch wird bei nahezu gleicher Drucksteifigkeit wie bei einer massiven Struktur, die für den Presssitz wichtig ist, die Herstellung erheblich vereinfacht und beschleunigt.

Fig. 5 zeigt eine perspektivische Ansicht der Lageranordnung 11".

An der Mantelfläche 30 ist ein axialer Kompressionsschlitz 44 angeordnet, der eine deutliche Kompression des Elastomerkörpers 16" über den Anteil aus der Presspassung hinaus ermöglicht.

Im Übrigen wird auf die Beschreibungen zum ersten Ausführungsbeispiel verwiesen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 2, 2', 2": Kraftfahrzeuglager
- 4: Lageraufnahme
- 6, 6': Aufnahmeauge
- 8, 8': Innenoberfläche
- 10: erster konischer Innenoberflächenabschnitt
- 11, 11', 11": Lageranordnung
- 12, 12', 12": Kunststoff-Kragenaußenhülse
- 14: Kragen
- 16, 16": Elastomerkörper
- 17, 17": zylindrischer Kern
- 17.1: Durchgangsausnehmung
- 18, 18‴: Außenkontur
- 20: kragenabgewandte Seite
- 22: konischer Hinterschnitt
- 24: zweiter konischer Innenoberflächenabschnitt
- 26: kragenabgewandter Bereich
- 28: zylindrischer Innenoberflächenabschnitt
- 30: Mantelfläche
- 32: Rippenstruktur
- 40: kragenseitige Stirnseite
- 42: ringförmige Freimachung
- 44: axialer Kompressionsschlitz

- A: Winkel zwischen erstem konischen Innenoberflächenabschnitt und Kragen
- B: erste Richtung
- C: zweite Richtung
- D: Innenoberflächendurchmesser
- Dk: Konturendurchmesser
- Dmin: geringster Innendurchmesser des Aufnahmeauges
- Dw: Wandstärke Elastomerkörper
- Dz: Wandstärke Kern
- M: Radiale Ausdehnung
- R: Radiale Richtung
- Z: Zentrallängsachse

## Patentansprüche

1. Kraftfahrzeuglager (2; 2'; 2"), mit einer Lageraufnahme (4) und einer Zentrallängsachse (Z), wobei die Lageraufnahme (4) ein Aufnahmeauge (6; 6') aufweist, das eine Innenoberfläche (8; 8') mit wenigstens einem ersten konischen Innenoberflächenabschnitt (10) aufweist, und einer in der Lageraufnahme (4) gehaltenen Kunststoff-Kragenaußenhülse (12; 12'; 12"), wobei die Kunststoff-Kragenaußenhülse (12; 12'; 12") einem radial ausgerichteten Kragen (14) aufweist, wobei der Kragen (14) in montiertem Zustand an der Lageraufnahme (4) um das Aufnahmeauge (6; 6') herum anliegt, einen sich im Wesentlichen axial erstreckenden Kern (17; 17"), sowie einem Elastomerkörper (16; 16"), der zwischen der Kunststoff-Kragenaußenhülse (12; 12'; 12") und dem Kern (17; 17") angeordnet ist, wobei die Kunststoff-Kragenaußenhülse (12; 12'; 12") eine zum wenigstens einen ersten konischen Innenoberflächenabschnitt (10) des Aufnahmeauges (6) im wesentlichen komplementäre Außenkontur (18; 18") aufweist, wobei sich der erste konische Innenoberflächenabschnitt (10) von einer kragenabgewandten Seite (20) in Richtung des Kragens (14) verjüngt, wobei der zur Außenkontur (18; 18") der Kunststoff-Kragenaußenhülse (12; 12'; 12") korrespondierende erste konische Innenoberflächenabschnitt (10) einen konischen Hinterschnitt (22) ausbildet, sodass die Kunststoff-Kragenaußenhülse (12; 12'; 12") gegen Herausrutschen bezüglich der Zentrallängsachse (Z) in einer ersten Richtung (B) durch den Kragen und in einer der ersten Richtung (B) entgegengesetzten zweiten Richtung (C) durch den konischen Hinterschnitt (22) gesichert ist.

2. Kraftfahrzeuglager (2; 2'; 2") nach Anspruch 1, wobei die Innenoberfläche (8; 8') des Aufnahmeauges (6; 6') wenigstens einen zweiten konischen Innenoberflächenabschnitt (24) aufweist, wobei erster konischer Innenoberflächenabschnitt (10) und zweiter konischer Innenoberflächenabschnitt (24) sich zum Inneren des Aufnahmeauges (6; 6') hin verjüngen oder aufweiten, wobei die Außenkontur (18; 18") der Kunststoff-Kragenaußenhülse (12; 12'; 12") im Wesentlichen komplementär zur Innenoberfläche (8; 8') des Aufnahmeauges (6; 6') ist.

3. Kraftfahrzeuglager (2; 2'; 2") nach Anspruch 1 oder 2, wobei die Lageraufnahme (4) aus Metall besteht, insbesondere aus gegossenem Metall, insbesondere aus Aluminiumdruckguss.

4. Kraftfahrzeuglager (2; 2'; 2") nach einem der vorangegangenen Ansprüche, wobei die Innenoberfläche (8; 8') des Aufnahmeauges (6; 6') unbearbeitet ist.

5. Kraftfahrzeuglager (2; 2'; 2") nach einem der vorangegangenen Ansprüche, wobei der wenigstens eine erste konische Innenoberflächenabschnitt (10) des Aufnahmeauges (6; 6') eine Entformungskontur ist.

6. Kraftfahrzeuglager (2; 2'; 2") nach einem der vorangegangenen Ansprüche, wobei die Kunststoff-Kragenaußenhülse (12; 12'; 12") mindestens teilweise im zur ersten konischen Innenoberflächenabschnitt (10) korrespondierenden kragenabgewandten Bereich (26) in der ersten Richtung (B) eine zunehmende radiale Ausdehnung (M) aufweist.

7. Kraftfahrzeuglager (2; 2'; 2") nach einem der vorangegangenen Ansprüche, wobei eine nicht montierte Kunststoff-Kragenaußenhülse (12; 12'; 12") einen größeren Konturendurchmesser (Dk) aufweist als ein Durchmesser (D) der Innenoberfläche (8; 8') des Aufnahmeauges (6; 6') auf gleicher axialer Höhe, sodass im montierten Zustand der Kunststoff-Kragenaußenhülse (12; 12'; 12") eine Kompression der Kunststoff-Kragenaußenhülse (12; 12'; 12") entsteht.

8. Kraftfahrzeuglager (2; 2'; 2") nach einem der vorangegangenen Ansprüche, wobei die Kunststoff-Kragenaußenhülse (12; 12'; 12") an einer äußeren Mantelfläche (30) eine Rippenstruktur (32) aufweist.

9. Kraftfahrzeuglager (2; 2'; 2") nach einem der vorangegangenen Ansprüche, wobei die Kunststoff-Kragenaußenhülse (12; 12'; 12") an ihrer äußeren Mantelfläche (30) wenigstens eine ringförmige Freimachung (42) aufweist.

10. Kraftfahrzeuglager (2; 2'; 2") nach Anspruch 9, wobei die ringförmige Freimachung (42) mit dem geringsten Innendurchmesser (Dmin) des Aufnahmeauges (6; 6') bzgl. seiner axialen Position korrespondiert.

11. Kraftfahrzeuglager (2; 2'; 2") nach einem der vorangegangenen Ansprüche, wobei die Kunststoff-Kragenaußenhülse (12; 12'; 12") wenigstens einen axialen Kompressionsschlitz (44) aufweist.

12. Kraftfahrzeuglager (2; 2'; 2") nach einem der vorangegangenen Ansprüche, wobei die zum ersten konischen Innenoberflächenabschnitt (10) korrespondierende Außenkontur (18; 18") des Hülsenkörpers (16; 16") mit dem Kragen (14) in einem Längsschnitt einen stumpfen Winkel (A) einschließt.

13. Kraftfahrzeug, mit wenigstens einem Kraftfahrzeuglager (2; 2'; 2") nach einem der vorgenannten Ansprüche.

14. Lageranordnung (11; 11'; 11") für ein Kraftfahrzeuglager (2; 2'; 2") nach einem der Ansprüche 1 bis 12.

## Claims

1. Motor vehicle bearing (2; 2'; 2"), comprising a bearing housing (4) and a central longitudinal axis (Z), wherein the bearing housing (4) has a mounting eye (6; 6') having an inner surface (8; 8') with at least a first conical inner surface section (10), and a plastic collar outer sleeve (12; 12'; 12") held in the bearing housing (4), wherein the plastic collar outer sleeve (12; 12'; 12") comprises a radially oriented collar (14), wherein the collar (14) abuts against the bearing housing (4) around the mounting eye (6; 6') when assembled, a substantially axially extending core (17; 17"), and an elastomer body (16; 16") arranged between the plastic collar outer sleeve (12; 12'; 12") and the core (17; 17"), wherein the plastic collar outer sleeve (12; 12'; 12") has an outer contour (18; 18") substantially complementary to at least one first conical inner surface section (10) of the mounting eye (6), wherein the first conical inner surface section (10) tapers from a side (20) facing away from the collar towards the collar (14), wherein the first conical inner surface section (10) corresponding to the outer contour (18; 18") of the plastic outer collar sleeve (12; 12'; 12") forms a conical undercut (22), so that the plastic collar outer sleeve (12; 12'; 12") is secured against slipping out of position relative to the central longitudinal axis (Z) in a first direction (B) by the collar and in a second direction (C) opposite to the first direction (B) by the conical undercut (22).

2. Motor vehicle bearing (2; 2'; 2") according to claim 1, wherein the inner surface (8; 8') of the mounting eye (6; 6') comprises at least a second conical inner surface section (24), wherein first conical inner surface section (10) and second conical inner surface section (24) taper or widen towards the interior of the mounting eye (6; 6'), wherein the outer contour (18; 18") of the plastic collar outer sleeve (12; 12'; 12") is substantially complementary to the inner surface (8; 8') of the mounting eye (6; 6').

3. Motor vehicle bearing (2; 2'; 2") according to claim 1 or 2, wherein the bearing housing (4) is made of metal, in particular cast metal, in particular die-cast aluminium.

4. Motor vehicle bearing (2; 2'; 2") according to one of the preceding claims, wherein the inner surface (8; 8') of the mounting eye (6; 6') is unmachined.

5. Motor vehicle bearing (2; 2'; 2") according to one of the preceding claims, wherein the at least one first conical inner surface section (10) of the mounting eye (6; 6') is a draft contour.

6. Motor vehicle bearing (2; 2'; 2") according to one of the preceding claims, wherein the plastic collar outer sleeve (12; 12'; 12") has, at least partially in the collar-opposite region (26) corresponding to the first conical inner surface section (10), an increasing radial dimension (M) in the first direction (B).

7. Motor vehicle bearing (2; 2'; 2") according to one of the preceding claims, wherein an unmounted plastic collar outer sleeve (12; 12'; 12") has a larger contour diameter (Dk) than a diameter (D) of the inner surface (8; 8') of the mounting eye (6; 6') at the same axial height, such that, when the plastic collar outer sleeve (12; 12'; 12") is mounted, the plastic collar outer sleeve (12; 12'; 12") is compressed.

8. Motor vehicle bearing (2; 2'; 2") according to any one of the preceding claims, wherein the plastic collar outer sleeve (12; 12'; 12") has a ribbed structure (32) on an outer surface (30).

9. Motor vehicle bearing (2; 2'; 2") according to one of the preceding claims, wherein the plastic collar outer sleeve (12; 12'; 12") has at least one annular recess (42) on its outer surface (30).

10. Motor vehicle bearing (2; 2'; 2") according to claim 9, wherein the annular recess (42) corresponds to the smallest internal diameter (Dmin) of the mounting eye (6; 6') with respect to its axial position.

11. Motor vehicle bearing (2; 2'; 2") according to one of the preceding claims, wherein the plastic collar outer sleeve (12; 12'; 12") comprises at least one axial compression slot (44).

12. Motor vehicle bearing (2; 2'; 2") according to one of the preceding claims, wherein the outer contour (18; 18") of the elastomer body (16; 16") corresponding to the first conical inner surface section (10) forms an obtuse angle (A) with the collar (14) in a longitudinal section.

13. Motor vehicle comprising at least one motor vehicle bearing (2; 2'; 2") according to any one of the preceding claims.

14. Bearing arrangement (11; 11'; 11") for a motor vehicle bearing (2; 2'; 2") according to any one of claims 1 to 12.

## Revendications

1. Palier de véhicule automobile (2; 2'; 2"), comprenant un logement de palier (4) et un axe longitudinal central (Z), le logement de palier (4) comportant un œillet de réception (6; 6') qui présente une surface intérieure (8; 8') avec au moins une première partie de surface intérieure conique (10), et d'une douille extérieure à collerette en plastique (12; 12'; 12") maintenue dans le logement de palier (4), la douille extérieure à collerette en plastique (12; 12'; 12") comportant une collerette (14) orientée radialement, la collerette (14) s'appuyant, à l'état monté, contre le logement de palier (4) autour de l'œillet de réception (6; 6'), un noyau s'étendant essentiellement axialement (17; 17"), ainsi qu'un corps en élastomère (16; 16") disposé entre la douille extérieure à collerette en plastique (12; 12'; 12") et le noyau (17; 17"), la douille extérieure à collerette en plastique (12; 12'; 12") présente un contour extérieur (18 ; 18") sensiblement complémentaire à au moins une première partie de surface intérieure conique (10) de l'œillet de réception (6), la première partie de surface intérieure conique (10) se rétrécissant depuis un côté opposé au collet (20) en direction de la collerette (14), la première partie de surface intérieure conique (10) correspondant au contour extérieur (18; 18") de la douille extérieure à collerette en plastique (12; 12'; 12") forme une contre-dépouille conique (22), de sorte que la douille extérieure à collerette en plastique (12; 12'; 12") est empêchée de glisser par rapport à l'axe longitudinal central (Z) dans une première direction (B) grâce au collet et dans une deuxième direction (C) opposée à la première direction (B) grâce à la contre-dépouille conique (22).

2. Palier de véhicule automobile (2; 2'; 2") selon la revendication 1, dans lequel la surface intérieure (8; 8') de l'œillet de réception (6; 6') comporte au moins une deuxième partie de surface intérieure conique (24), la première partie de surface intérieure conique (10) et la deuxième partie de surface intérieure conique (24) se rétrécissant ou s'élargissant vers l'intérieur de l'œillet de réception (6; 6'), le contour extérieur (18; 18") de la douille extérieure à collerette en plastique (12; 12'; 12") étant sensiblement complémentaire de la surface intérieure (8; 8') de l'œillet de réception (6; 6').

3. Palier de véhicule automobile (2; 2'; 2") selon la revendication 1 ou 2, dans lequel le logement de palier (4) est en métal, en particulier en métal moulé, notamment en aluminium moulé sous pression.

4. Palier de véhicule automobile (2; 2'; 2") selon l'une des revendications précédentes, dans lequel la surface intérieure (8; 8') de l'œillet de réception (6; 6') n'est pas usinée.

5. Palier de véhicule automobile (2; 2'; 2") selon l'une des revendications précédentes, dans lequel la au moins une première partie de surface intérieure conique (10) de l'œillet de réception (6; 6') est un contour de démoulage.

6. Palier de véhicule automobile (2; 2'; 2") selon l'une des revendications précédentes, dans lequel la douille extérieure à collerette en plastique (12; 12'; 12") présente, au moins partiellement dans la zone (26) opposée au collet et correspondant à la première partie de surface intérieure conique (10), une extension radiale croissante (M) dans la première direction (B).

7. Palier de véhicule automobile (2; 2'; 2") selon l'une des revendications précédentes, dans lequel une douille extérieure à collerette en plastique non montée (12; 12'; 12") présente un diamètre de contour (Dk) supérieur à un diamètre (D) de la surface intérieure (8; 8') de l'œillet de réception (6 ; 6') à la même hauteur axiale, de sorte qu'à l'état monté de la douille extérieure à collerette en plastique (12; 12'; 12") entraîne une compression de la douille extérieure à collerette en plastique (12; 12'; 12").

8. Palier de véhicule automobile (2; 2'; 2") selon l'une des revendications précédentes, dans lequel la douille extérieure à collerette en plastique (12; 12'; 12") présente une structure nervurée (32) sur une surface latérale extérieure (30).

9. Palier de véhicule automobile (2; 2'; 2") selon l'une des revendications précédentes, dans lequel la douille extérieure à collerette en plastique (12; 12'; 12") présente, sur sa surface latérale extérieure (30), au moins un évidement annulaire (42).

10. Palier de véhicule automobile (2; 2'; 2") selon la revendication 9, dans lequel l'évidement annulaire (42) correspond au plus petit diamètre intérieur (Dmin) de l'œillet de réception (6; 6') en ce qui concerne sa position axiale.

11. Palier de véhicule automobile (2; 2'; 2") selon l'une des revendications précédentes, dans lequel la douille extérieure à collerette en plastique (12; 12'; 12") comporte au moins une fente de compression axiale (44).

12. Palier de véhicule automobile (2; 2'; 2") selon l'une des revendications précédentes, le contour extérieur (18; 18") du corps en élastomère (16; 16") correspondant à la première partie de surface intérieure conique (10) formant un angle obtus (A) avec la collerette (14) en coupe longitudinale.

13. Véhicule automobile, comportant au moins un palier de véhicule automobile (2; 2'; 2") selon l'une des revendications précédentes.

14. Agencement de palier (11; 11'; 11") pour un palier de véhicule automobile (2; 2'; 2") selon l'une des revendications 1 à 12.
